(19) Europäisches Patentamt
European Patent Office
Office européen des brevets

(11) **EP 4 394 443 A1**

(12) **EUROPEAN PATENT APPLICATION**

(43) Date of publication:
**03.07.2024 Bulletin 2024/27**

(21) Application number: **22216730.6**

(22) Date of filing: **27.12.2022**

(51) International Patent Classification (IPC):
**G01S 13/00** (2006.01)   **G01S 13/42** (2006.01)
**G01S 13/76** (2006.01)   **G01S 13/46** (2006.01)

(52) Cooperative Patent Classification (CPC):
**G01S 13/003; G01S 13/42; G01S 13/765;**
G01S 2013/466; G01S 2013/468

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Imec VZW
3001 Leuven (BE)**

• **Katholieke Universiteit Leuven
KU Leuven Research & Development
3000 Leuven (BE)**

(72) Inventors:
• **SAKHNINI, Adham
3001 Heverlee (BE)**
• **BOURDOUX, Andre
4910 Theux (BE)**

(74) Representative: **AWA Sweden AB
Box 5117
200 71 Malmö (SE)**

(54) **LOCATION AND TIME SYNCHRONIZATION METHOD FOR RADAR APPLICATION IN COMMUNICATION SYSTEMS**

(57)    A method (1000) for use in radar processing, comprises processing (1300) a radar signal captured by a radar receiver (104), said processing comprising determining, for a scattering object a direction of departure from a radar transmitter (102) to said scattering object; and a direction of arrival at said radar receiver (104) from said scattering object; and calculating (1400) a position of said scattering object based on said direction of arrival; said direction of departure; and predetermined position and orientation information of said radar transmitter in relation to said radar receiver, whereby said calculating of said position of said scattering object is unbiased by a time synchronization offset between said radar transmitter and said radar receiver.

Fig. 1

**Description**

Technical field

The present inventive concept relates to a method for use in radar processing, to a device configured for implementing the method, and to a non-transitory computer-readable medium comprising instructions which, when executed by a computer or processor, causes the computer or processor to carry out the method.

Background

Distributed communication systems, which may consists of hundreds of coordinated and spatially distributed access points (APs), are emerging as top candidates for future wireless communication standards. Through synchronous and coherent data transmission and reception, many users can be served simultaneously with high data rates and with high reliability.

Such systems also provide an interesting opportunity for radar applications. When compared to traditional collocated radar systems, the dense and wide antenna distribution enables an increasingly dense radar coverage over relatively large geographical areas. The added radar capabilities are expected to enable a wide range of new applications and services, and hence are of major economic importance.

For such systems to be practical and motivated in a distributed communication system (such as a cell-free system), minimal modifications to the primary communication hardware should be made to drive down associated costs. This poses several technical challenges since the hardware specifications of a communication system are generally less strict than that of a radar system. Features that are required in a radar system, but not necessary in a communication system include nanosecond level-timing synchronization and sub-meter antenna position accuracy.

For example, for a communication system utilizing the OFDM modulation, it is normally sufficient for the timing to be accurate to within the cyclic prefix duration, which is roughly 0.1-1 microseconds. For radar application, such an offset would cause range estimation errors of roughly 30-300 meters, making the realized system relatively poor at inferring location information.

In addition, without knowing the antenna locations and relative antenna orientation, it is not possible to derive the target locations from the distance and angle measurements even under perfect synchronization.

Summary

An objective of the present inventive concept is to allow for well-performing radar applications in a wireless communication system given the above.

To this end, a method for use in radar processing is provided, comprising processing a radar signal captured by a radar receiver, said processing comprising determining, for a scattering object a direction of departure from a radar transmitter to said scattering object; and a direction of arrival at said radar receiver from said scattering object; and calculating a position of said scattering object based on said direction of arrival; said direction of departure; and predetermined position and orientation information of said radar transmitter in relation to said radar receiver, whereby said calculating of said position of said scattering object is unbiased by a time synchronization offset between said radar transmitter and said radar receiver.

Predetermined position and orientation information of said radar transmitter in relation to said radar receiver should be understood as any such position and orientation information not derived from the processing of the captured radar signal.

For example, predetermined position and orientation may have been determined from earlier processing a different radar signal, or measured or calibrated in some other way.

In another example, the predetermined position and orientation information of said radar transmitter in relation to said radar receiver may be hypothesized or tentative position and orientation information, whereby the actual position and orientation information may be determined in an iterative process.

The time synchronization offset should be understood to be able to be expressed, e.g., either as a time or as a distance or range, as related through the speed of light.

The present inventive concept stems from a realization that, while a determination of the position of the scattering object using conventional radar processing, such as range-doppler-angle processing, may be biased by a timing offset between the radar transmitter and the radar receiver, such a determination based on predetermined position and orientation information of the radar transmitter in relation to the radar receiver may be performed in a manner unbiased by such a timing offset. Furthermore, through comparison of conventional range estimation biased by the timing offset and range estimation unbiased by the timing offset, the timing offset between the radar transmitter and the radar receiver may be determined.

More generally, through the use of several scattering objects, the present inventive concept may allow for determination of the position and/or orientation information of said radar transmitter in relation to said radar receiver as well.

Hereby, the present inventive concept may allow for a time/clock synchronization in the order of nanoseconds, determining of relative antenna array rotation in the order of degrees and antenna array locations in the order of decimeters or less, using only conventional hardware components of a wireless communication system. In particular, it may allow for dispensing with the implementation of GNSS and/or magnetometer modules for determining position and/or orientation information, which would bring up associated costs which is undesirable, particularly in large-scale employments. In addition, such modules may be very sensitive to environmental circumstances and disturbances. Further, use of cabling for synchronization can be avoided which quickly becomes infeasible for large scale systems due to the large number of wires that needs to be maintained.

Further again, achievable time synchronization in the order of nanoseconds may be used to tighten the synchronization between the entities of a wireless communication system, which in turn can improve the communication system in which the radar system may operate. Accurate timing is particularly important when the communication system performs distributed beamforming and combining, exemplary coordinated multipoint transmission and reception, or methods introduced in the cell-free communications literature.

The present inventive concept may further be advantageous in dedicated distributed radar systems for synchronization without the need for any dedicated hardware.

According to an embodiment, said calculating of said position of the scattering object comprises determining a range between said radar transmitter, said scattering object, and said radar receiver. This is a typical way of carrying out the present inventive concept.

According to an embodiment, said processing of said radar signal further comprises determining a range between said radar transmitter, said scattering object, and said radar receiver, whereby said range is biased by said time synchronization offset; and said method further comprises estimating said time synchronization offset based on the range biased by said time synchronization offset, and the range unbiased by said time synchronization offset. This is a particularly beneficial application of the present inventive concept.

According to an embodiment, the method further comprises performing said calculating for a plurality of scattering objects; determining a respective refined position for each scattering object of said plurality of scattering objects through minimizing a function depending on, for each scattering object and for a plurality of position parameters pertaining to said scattering object, a difference between a position parameter determined through said calculating and a corresponding free parameter to be determined. This is a particularly beneficial application of the present inventive concept, in a particularly beneficial way allowing for the determination of not only the timing offset between the radar transmitter and the radar receiver, but also determining refined positions of the scattering objects and, potentially, the position and orientation information of said radar transmitter in relation to said radar receiver.

According to an embodiment, said position parameters comprise said direction of arrival; said direction of departure; and said range between said radar transmitter, said scattering object, and said radar receiver, as corrected by the estimated time synchronization offset. This is a particularly beneficial way of carrying out the present inventive concept.

According to an embodiment, the method further comprises determining, through said minimizing, said position and orientation information of said radar transmitter in relation to said radar receiver.

According to an embodiment, the method further comprises determining, through said minimizing, an offset of said angle of departure as determined through said processing.

According to an embodiment, said minimizing comprises performing said calculating for a hypothesis grid of possible transmitter locations and/or offsets of said angle of departure. This is a particularly beneficial way of carrying out the present inventive concept.

According to an embodiment, the method further comprises adjusting a time synchronization between said radar transmitter and said radar receiver based on the estimated time synchronization offset.

According to an embodiment, the method further comprises, before said calculating, performing a coarse synchronization between said radar transmitter and said radar receiver.

According to an embodiment, said radar signal is OFDM modulated. This is a typical application of the present inventive concept.

According to an embodiment, each of said radar receiver and said radar transmitter is comprised in a wireless communication system. This is a typical application of the present inventive concept.

According to an embodiment, said scattering object, or at least one of said plurality of scattering objects, is an active or a passive reflecting aperture. For example, active or a passive reflecting aperture may be a reflector antenna.

According to an aspect, there is provided a device configured implementing the above method. This aspect may generally present the same or corresponding advantages as the former aspect.

According to an aspect, there is provided a non-transitory computer-readable medium comprising instructions which, when executed by a computer or processor, causes the computer or processor to carry out the above method. This aspect may generally present the same or corresponding advantages as the former aspect.

Brief description of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.

Fig. 1 shows a system comprising a radar transmitter and a radar receiver.
Fig. 2 is a flow chart of a method example.

Detailed description

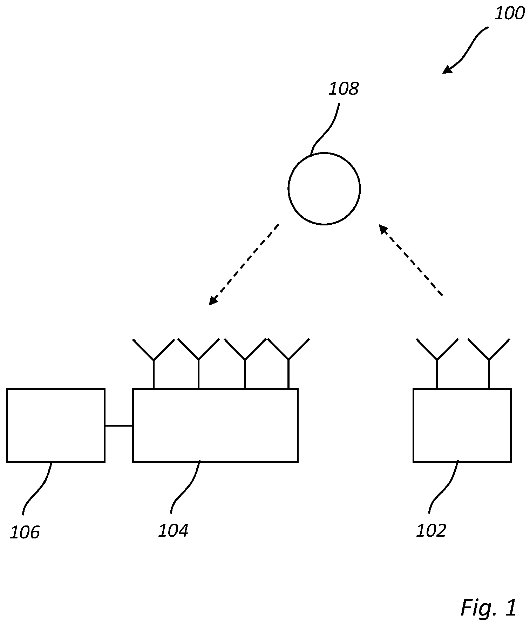

Fig. 1 shows a system 100 comprising a radar transmitter 102 and a radar receiver 104. The system may further comprise a processing unit 106. The processing unit 106 may be connected to the radar receiver 104, for example wirelessly or by wire.

The system 100 may be a wireless communication system and/or a distributed communication system. Thus the radar transmitter 102, the radar receiver 104, and the processing unit 106 may be comprised in the wireless communication system.

One or more of the radar transmitter 102, the radar receiver 104 and the processing unit 106 may be an access point (AP) or a station (STA) of the wireless communication system.

The wireless communication system may, for example, be a Wi-Fi and/or IEEE 802.11 system.

Alternatively, as a further example, the wireless communication system may be a mobile network, such as an LTE, 4G, 5G, such as 5G-NR, and/or 6G network. Then, one or more of the radar transmitter 102, the radar receiver 104, and/or the processing unit 106 may be a base station, such as an eNB and/or a mobile terminal/UE.

Generally, one or more of the radar transmitter 102, the radar receiver 104, and/or the processing unit may be access points, base-stations, user equipment or other transmitting or receiving entities.

Naturally, other applications are equally possible where the system 100 is not a wireless communication system. For example, the system 100 may be a dedicated radar system. As further examples, the system 100 may be a wireless power transfer system or a SONAR system.

Generally, the system 100 may be configured for self-synchronization, antenna positioning, and asynchronous radar processing, as known in the art. In particular, the wireless communication system may implement methods for clock synchronization, self-positioning, asynchronous radar processing and multipath detection as known in the art or as detailed in the present disclosure.

The present inventive concept will be exemplified here using a system 100 comprising one radar transmitter 102 and one radar receiver 104. However, the present inventive concept is equally applicable to a system comprising a plurality of radar transmitters and radar receivers, which each may comprise a respective antenna array. Generally, multiple radar transmitters, such as multiple AP may be transmitting and receiving at the same time. However, without loss of generality, in the following, the present inventive concept will be exemplified through the use of one radar transmitter and one radar receiver.

The present inventive concept is applicable to arbitrary antenna arrays at the radar transmitter 102 and at the radar receiver 104, provided that the individual antennas of the respective antenna array are sufficiently collocated, as known in the art.

Further, it should be understood that throughout this disclosure, the radar transmitter 102 and the radar receiver 104, with their corresponding antenna arrays, are labeled according to their function in carrying out the disclosed method example. Naturally, a given entity, such as one herein labeled as a radar transmitter, may potentially also, in a different context, function as a radar receiver, a processing unit, and so on. Further, the entity may have another basic function in the communication system, such as an AP, STA, eNB, UE, or the like.

The present disclosure relates to bistatic ranging, i.e., the radar transmitter 102 and the radar receiver 104 being located at different locations, as opposed to monostatic or collocated radar, where receiver and transmitter is at the same location. This may provide advantages in a wireless communication system in that entities of such a communication system, such as APs may not be able to transmit and receive at the same time due to the strong transmit-to-receive spillover. Further, by using more distributed antennas as provided in such a wireless communication system, better radar performance can be obtained.

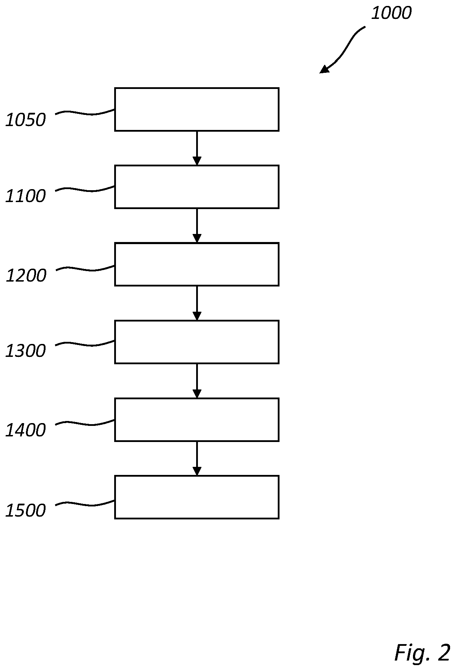

Fig 2 is a flow chart showing a method example 1000 for use in radar processing, as implementable in the system 100.

At 1050, a course time synchronization may be performed between at least the radar transmitter 102 and the radar receiver 104, as generally known in the art. Such time synchronization may be performed using methods known to the skilled person, e.g., as conventional in the kind of wireless communication system at hand. Typically, such a coarse time synchronization may provide time synchronization in the order of microseconds. The coarse time synchronization is thus performed before the calculating 1400 (see below). In general, the course time synchronization may be performed at any time before the calculating 1400.

At 1100 the radar transmitter 102 may transmit a radar signal. Typically, the radar signal may be an orthogonal frequency division multiplexing (OFDM) waveform. In other words, the radar signal may be OFDM modulated. An OFDM waveform may be compatible with many communication systems, for example, the aforementioned IEEE 802.11 and 5G-NR. However, the present inventive concept is equally compatible with other waveforms and/or modulation schemes.

The radar transmitter may transmit the radar signal with a sequence per transmitter antenna in the antenna array of the radar transmitter as multiplexed waveforms. In particular, the radar transmitter may transmit a sequence of l=1... *L* orthogonal OFDM symbols over k=1... K subcarriers.

The radar signal may be scattered by one or more scattering objects 108 (cf. Fig. 1). In a particular example, the scattering object 108 may be an active or passive reflecting aperture, such as a reflector antenna.

At 1200, quasi-simultaneously with 1100, the radar receiver 104 may capture the transmitted radar signal, as scattered by the one or more scattering objects.

At 1300, the transmitted radar signal may be received by the processing unit 106. Alternatively, the processing unit may be identical to or integrated with the radar receiver 104.

At 1400, the radar signal as captured by the radar receiver is processed. Processing may, e.g., occur at the processing unit or at the radar receiver, or, e.g., partially at the radar receiver and partially at the processing unit, i.e., processing may begin at the radar receiver and the result of this partial processing at the radar receiver may be transferred at 1300 to the processing unit.

Based on receiving the scattered radar signal at the antennas of the antenna array of the radar receiver, demultiplexing may be performed and the propagation channel recovered, as known in the art.

With transmitted orthogonal OFDM symbols (in e.g., time or frequency), it can be shown that the demodulated signal in the frequency domain, received at the i:th receiving antenna of the antenna array at the radar receiver 104 and originating from the j:th transmitting antenna of the antenna array at the radar transmitter 102 can be written as

$$y_{i,j}(k,l) = \sum_{q=1}^{Q} \alpha_q a_{q,j} b_{q,i} e^{-j2\pi \frac{\Delta f(d_q + \Delta d)}{c} k} e^{-j2\pi \frac{\dot{d}_q T_p}{\lambda} l} + n_{i,j}(k,l)$$

after appropriate processing, as generally known in the art.

Here, *k* refers to the subcarrier of the OFDM symbol, *l* the symbol index, *q* the scattering object, $\alpha_q$ the amplitude, $a_{q,j}$ the transmit channel phase shift, $b_{q,i}$ the receive channel phase shift, $\Delta f$ the subcarrier spacing, $d_q$ the bistatic range between the radar transmitter 102 and the radar receiver 104, $\dot{d}_q$ the bistatic velocity, $\lambda$ the wavelength, $T_p$ the symbol repetition interval and $n_{i,j}(k,l)$ some additive noise.

The parameter $\Delta d$ is the range offset caused by the timing synchronization error between the radar transmitter 102 and the radar receiver 104 and is related to the timing offset as $\Delta t = \Delta d/c$ where c is the speed of light.

The received signal may be range-doppler-angle processed as generally known in the art. Output from the processing, as conventionally known, may be a set of estimates, for each scattering object q,

$$\widehat{d_q} = d_q + \Delta d + n_{d,q}$$

$$\widehat{\theta_q} = \theta_q + n_{\theta,q}$$

$$\widehat{\phi_q} = \phi_q + \Delta\phi + n_{\phi,q}$$

where $d_q$ is the range, known as the bistatic range in the art, between the radar transmitter, the respective scattering object q 108, and the radar receiver, $\theta_q$ is an angle representing the direction of departure from the radar transmitter to the respective scattering object, and $\phi_q$ is an angle representing the direction of arrival at the radar receiver from the

respective scattering object. $\widehat{d_q}$, $\widehat{\theta_q}$, and $\widehat{\phi_q}$ are respective estimates of the aforementioned variables.

Further, $\Delta d$ is an offset in the determined bistatic range $\widehat{d_q}$ due to a time synchronization offset between the radar transmitter and the radar receiver, i.e., the determining of the bistatic distance using conventional radar processing known in the art, such as range-doppler-angle processing is biased by the time synchronization offset between the radar transmitter 102 and the radar transceiver 104.

Further, $\Delta\phi$ is an offset in the angle of arrival at the radar receiver 104 due to uncertainty in the alignment of the antenna array of the radar transmitter with respect to the antenna array of the radar receiver.

Finally, $q = 1... Q$, and $n_{d,q}$, $n_{\theta,q}$ and $n_{\phi,q}$ is noise with power $\sigma_{d,q}^2$, $\sigma_{\theta,q}^2$ and $\sigma_{\phi,q}^2$.

Thus, the processing comprises determining, for a scattering object 108, a direction of departure from the radar transmitter 102 to the scattering object. Further, the processing comprises determining, for the scattering object, a direction of arrival at said radar receiver 104 from the scattering object.

Moreover, in the present example, the processing comprises determining the bistatic range, i.e., the range between said radar transmitter, said scattering object, and said radar receiver.

In a particular example, the received signal $y_{i,j}(k, l)$ may be processed by constructing a filter $w_{k,l,i,j}(d, \theta, \phi)$ that is matched to an echo originating from a bistatic range $d$, direction of arrival $\theta$ and direction of departure $\phi$, which gives

$$r(d,\theta,\phi) = \sum_{j=1}^{N}\sum_{i=1}^{N}\sum_{l=1}^{L}\sum_{k=1}^{K} y_{i,j}(k,l)w_{k,l,i,j}(d,\theta,\phi)$$
$$= \underbrace{\alpha(d,\theta,\phi)}_{\text{SOI}} + \underbrace{c(d,\theta,\phi)}_{\text{Clutter}} + \underbrace{n(d,\theta,\phi)}_{\text{Noise}}$$

where $\alpha(d, \theta, \phi)$ is the amplitude originating from the scatterer of interest (SOI), and where $c(d, \theta, \phi)$ and $n(d, \theta, \phi)$ are the corresponding clutter and noise, respectively. This procedure has well-known advantages of suppressing the noise and resolving scatterers originating from different locations in space and velocity.

Further, again as an example, a set of $q = 1... \tilde{Q}$ hypothetic scatterers with parameters $(d_q + \Delta d, \theta_q, \phi_q + \Delta\phi)$ may be constructed and the matched filter output $r(d_q + \Delta d, \theta_q, \phi_q + \Delta\phi)$ may be evaluated for each of those hypotheses, and the estimates as per the above may be selected for values where a power $|r(d_q + \Delta d, \theta_q, \phi_q + \Delta\phi)|^2$ exceeds some pre-determined threshold $\gamma_q$.

Further, the processing 1400 comprises calculating a position of the scattering object based on the direction of arrival, the direction of departure and predetermined position and orientation information of the radar transmitter in relation to the radar receiver, as will be exemplified in the following.

Assuming that orientation information of the radar receiver in relation to the radar transmitter is known, the offset $\Delta\phi$ in the angle of arrival at the radar receiver 104, as output from the conventional processing, vanishes. Thus, apart from the noise terms, from the radar processing, as according to the above, only the offset in the bistatic range $\Delta d$ is unknown:

$$\widehat{d_q} = d_q + \Delta d + n_{d,q}$$

$$\widehat{\theta_q} = \theta_q + n_{\theta,q}$$

$$\widehat{\phi_q} = \phi_q + n_{\phi,q}$$

Hereby, the position of the scattering object $x_q$, $y_q$ may be estimated based on $\widehat{d_q}$, $\widehat{\theta_q}$ and $\widehat{\phi_q}$, as per:

$$\widehat{x_q} = x_r + \frac{\widehat{y_q} - y_r}{\tan(\widehat{\theta_q})}$$

$$\widehat{y_q} = \frac{\tan(\widehat{\theta_q})\, y_t - \tan(\widehat{\phi_q}) y_r + \tan(\widehat{\theta_q})\tan(\widehat{\phi_q})\,(x_r - x_t)}{\tan(\widehat{\theta_q}) - \tan(\widehat{\phi_q})}.$$

where $(x_r, y_r)$ is the center location of the radar transmitter, and $(x_t, y_t)$ is the center location of the radar receiver. Here, $(x_r, y_r)$ and $(x_t, y_t)$, or at least the differences $y_t - y_r$ and $x_r - x_t$, i.e., the transmitter and receiver locations relative to each other, are assumed to be previously know, for example through on-site calibration, off-site calibration, or automatic calibration.

Notably, as evident from the absence of $\Delta d$ in the above expressions for $\widehat{x_q}$ and $\widehat{y_q}$, this calculating of the position of the scattering object is unbiased by the time synchronization offset between the radar transmitter and the radar receiver.

Based on the above, a *secondary distance estimate* may be calculated:

$$\widehat{d_{2,q}} = \sqrt{\left(\widehat{x_q} - x_r\right)^2 + \left(\widehat{y_q} - y_r\right)^2} + \sqrt{\left(\widehat{x_q} - x_t\right)^2 + \left(\widehat{y_q} - y_t\right)^2}$$

that is independent of the time synchronization offset between the radar transmitter and the radar receiver, i.e., the secondary distance estimate $d_{2,q}$ represents a range between said radar transmitter 102, said scattering object 108, and said radar receiver 104 unbiased by the time synchronization offset.

In a simple example, the distance offset $\Delta d$ may now be determined based on a single scattering object 108 $q$ as

$$\widehat{\Delta d} = \widehat{d_q} - \widehat{d_{2,q}}.$$

In a more refined example, the distance offset $\Delta d$ may be determined based on a plurality $Q$ of scattering objects 108 as:

$$\widehat{\Delta d} = \frac{1}{Q}\sum_{q=1}^{Q}\left(\widehat{d_q} - \widehat{d_{2,q}}\right)$$

Given the distance estimate $\widehat{\Delta d}$, the timing offset can be obtained as $\widehat{\Delta t} = \widehat{\Delta d}/c$ where c is the speed of light.

Thus, the time synchronization offset is estimated based on the range $\widehat{d_q}$ biased by the time synchronization offset, and the range $\widehat{d_{2,q}}$ unbiased by the time synchronization offset.

Then, at 1500, the time synchronization between said radar transmitter and said radar receiver may be updated based on the estimated time synchronization offset $\widehat{\Delta t}$. This may be performed as generally known in the art, for example through wireless signaling between the radar transmitter 102 and the radar receiver 104.

Optionally, as part of the calculating 1400, the location estimates $\widehat{x_q}$ and $\widehat{y_q}$, and the offset estimate $\widehat{\Delta d}$ may be refined by minimizing the weighted non-linear least squares (NLS) problem

$$\min_{x_q,y_q,\Delta d} \sum_{q=1}^{Q} \left( \frac{1}{\sigma_{d,q}^2} \left( \widehat{d_q} - d_q - \Delta d \right)^2 + \frac{1}{\sigma_{\theta,q}^2} \left( \widehat{\theta_q} - \theta_q \right)^2 + \frac{1}{\sigma_{\phi,q}^2} \left( \widehat{\phi_q} - \phi_q \right)^2 \right)$$

which can be done with a local search, using for instance a second-order quasi-Newton or trust-region method by initializing at the previously estimated location and distance offset values, as generally known in the art.

The standard deviations $\sigma_{d,q}^2$, $\sigma_{\theta,q}^2$ and $\sigma_{\phi,q}^2$ may be estimated using conventional methods known in the art such as a Cramer-Rao lower bound.

Thus, a respective refined position for each scattering object of the plurality of scattering objects through minimizing a function depending on, for each scattering object and for a plurality of position parameters pertaining to said scattering object, a difference between a position parameter determined through said calculating and a corresponding free parameter to be determined. The position parameters may comprise said direction of arrival; said direction of departure; and said range between said radar transmitter, said scattering object, and said radar receiver, as corrected by the estimated time synchronization offset.

Further, the present inventive concept allows for a determination of not only the timing offset between the radar transmitter and the radar receiver, but also the position and orientation of the radar transmitter in relation to the radar receiver, as will be detailed and exemplified in the following.

Such a determination may be made, at 1400, through the minimization of the non-linear least squares (NLS) problem

$$\min_{x_q,y_q,\Delta d,x_t,y_t,\Delta\phi} \sum_{q=1}^{Q} \left( \frac{1}{\sigma_{d,q}^2} \left( \widehat{d_q} - d_q - \Delta d \right)^2 + \frac{1}{\sigma_{\theta,q}^2} \left( \widehat{\theta_q} - \theta_q \right)^2 \right.$$
$$\left. + \frac{1}{\sigma_{\phi,q}^2} \left( \widehat{\phi_q} - \phi_q - \Delta\phi \right)^2 \right)$$

wherein $x_t$, $y_t$ are cartesian coordinates of the radar transmitter 102 in relation to the radar receiver 104, i.e., in a coordinate system where the radar receiver is at the origin,

$$\widehat{\Delta d} = \frac{1}{Q} \sum_{q=1}^{Q} \left( \widehat{d_q} - \widehat{d_{2,q}} \right),$$

$$\widehat{d_{2,q}} = \sqrt{\left( \widehat{x_q} - x_r \right)^2 + \left( \widehat{y_q} - y_r \right)^2} + \sqrt{\left( \widehat{x_q} - x_t \right)^2 + \left( \widehat{y_q} - y_t \right)^2},$$

$$\widehat{y_q} = \frac{\tan\left(\widehat{\theta_q}\right) y_t - \tan\left(\widehat{\phi_q}\right) y_r + \tan\left(\widehat{\theta_q}\right) \tan\left(\widehat{\phi_q}\right) (x_r - x_t)}{\tan\left(\widehat{\theta_q}\right) - \tan\left(\widehat{\phi_q}\right)}$$

and

$$\widehat{x_q} = x_r + \frac{\widehat{y_q} - y_r}{\tan\left(\widehat{\theta_q}\right)}$$

This NLS problem corresponds to the one above, with the difference that $x_t$, $y_t$, and $\Delta\phi$ now are free parameters.

In other words, through the above minimizing the position $x_t, y_t$ of the radar transmitter in relation to the radar receiver may be determined, as well as the offset $\Delta\phi$ of the angle of departure from the radar transmitter 102.

The minimizing may be performed by defining a three-dimensional hypothesis grid of possible transmitter locations $x_t, y_t$ and/or offsets of the angle of departure $\Delta\phi$ and picking the point in the grid minimizing the above NLS error.

As a final, optional, step, the error may further be minimized by starting at $\widehat{x_q}, \widehat{y_q}, \widehat{\Delta d}, \widehat{x_t}, \widehat{y_t}$ and $\widehat{\Delta\phi}$. This can be done with a local search, using for instance a second-order quasi-Newton or trust-region method by initializing at the previously estimated location and distance offset values.

The NLS method may be particularly advantageous when there is noise and interference corrupting the distance and angle estimates. In cases where outliers are present, one may change the NLS to a robust version, such as a Huber loss. Furthermore, one may iteratively discard outliers if necessary and re-estimate the parameters.

Simulations were performed to validate the method. Using a 24 GHz 5G-NR compliant OFDM waveform using 4 transmit and 4 receive antennas indicate that a synchronization accuracy of 4.96 ns, a rotation accuracy of 0.54 degrees and center position error of (0.31, 0.6) m. The target locations were estimated within an accuracy being in the order of a few decimeters. Naturally, exact performance may depend on the actual geometric configuration, signal to noise ratios and number of targets, but the aforementioned results give an indication of the order of magnitude of achievable performance.

In the above the inventive concept has mainly been described with reference to a limited number of examples. However, as is readily appreciated by a person skilled in the art, other examples than the ones disclosed above are equally possible within the scope of the inventive concept, as defined by the appended claims.

For example, while the present disclosure, for simplicity, represents the direction of departure as angles in a two dimensional plane, and positions as cartesian coordinates in the plane, the present inventive concept is equally applicable in three dimensions.

**Claims**

1. A method (1000) for use in radar processing, comprising:

    processing (1300) a radar signal captured by a radar receiver (104), said processing comprising determining, for a scattering object:

       a direction of departure from a radar transmitter (102) to said scattering object; and
       a direction of arrival at said radar receiver (104) from said scattering object; and

    calculating (1400) a position of said scattering object based on:

       said direction of arrival;
       said direction of departure; and
       predetermined position and orientation information of said

    radar transmitter in relation to said radar receiver,

    whereby said calculating of said position of said scattering object is unbiased by a time synchronization offset between said radar transmitter and said radar receiver.

2. The method of claim 1, wherein said calculating (1400) of said position of the scattering object comprises determining a range between said radar transmitter, said scattering object, and said radar receiver.

3. The method of claim 2, wherein said processing (1300) of said radar signal further comprises:
   determining a range between said radar transmitter, said scattering object, and said radar receiver, whereby said range is biased by said time synchronization offset; and said method further comprises:
   estimating said time synchronization offset based on the range biased by said time synchronization offset, and the range unbiased by said time synchronization offset.

4. The method of any one of claims 1-3, further comprising:

performing said calculating for a plurality of scattering objects;
determining a respective refined position for each scattering object of said plurality of scattering objects through minimizing a function depending on, for each scattering object and for a plurality of position parameters pertaining to said scattering object, a difference between a position parameter determined through said calculating and a corresponding free parameter to be determined.

5. The method of claim 4, wherein said position parameters comprise said direction of arrival; said direction of departure; and said range between said radar transmitter, said scattering object, and said radar receiver, as corrected by the estimated time synchronization offset.

6. The method of claim 5, further comprising determining, through said minimizing, said position and orientation information of said radar transmitter in relation to said radar receiver.

7. The method of any one of claims 5-6, further comprising determining, through said minimizing, an offset of said angle of departure as determined through said processing.

8. The method of any one of claims 5-7, said minimizing comprising performing said calculating for an hypothesis grid of possible transmitter locations and/or offsets of said angle of departure.

9. The method of any one of claims 3-8, further comprising adjusting a time synchronization between said radar transmitter and said radar receiver based on the estimated time synchronization offset.

10. The method of any one of claims 3-9, further comprising, before said calculating, performing a coarse synchronization (1050) between said radar transmitter and said radar receiver.

11. The method of any one of claims 1-10, wherein said radar signal is OFDM modulated.

12. The method of any one of claims 1-11, wherein each of said radar receiver and said radar transmitter is comprised in a wireless communication system.

13. The method of any one of claims 1-12, wherein said scattering object, or at least one of said plurality of scattering objects, is an active or a passive reflecting aperture.

14. A device configured implementing the method of any one of claims 1-13.

15. A non-transitory computer-readable medium comprising instructions which, when executed by a computer or processor, causes the computer or processor to carry out the method of any one of claims 1-13.

Fig. 1

Fig. 2

Europäisches
Patentamt

European
Patent Office

Office européen
des brevets

# EUROPEAN SEARCH REPORT

Application Number

EP 22 21 6730

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/207926 A1 (ERICSSON TELEFON AB L M [SE]) 6 October 2022 (2022-10-06) | 1,2, 12-15 | INV. G01S13/00 |
| Y | * figure 17 * | 3-9 | G01S13/42 |
| A | * page 1, line 22 - line 26 * | 10,11 | G01S13/76 |
|   | * page 3, line 30 - page 4, line 03 * |   | G01S13/46 |
|   | * page 4, line 04 - line 07 * |   |   |
|   | * page 8, line 26 - page 9, line 14 * |   |   |
|   | * page 9, line 27 - line 32 * |   |   |
|   | * page 11, line 14 - line 17 * |   |   |
|   | * page 16, line 19 - line 24 * |   |   |
|   | ----- |   |   |
| Y | US 2022/291325 A1 (GULATI KAPIL [US] ET AL) 15 September 2022 (2022-09-15) | 3,9 |   |
| A | * figure 8 * | 10,11 |   |
|   | * paragraph [0047] * |   |   |
|   | * paragraph [0058] * |   |   |
|   | * paragraph [0062] - paragraph [0064] * |   |   |
|   | * paragraph [0070] - paragraph [0073] * |   |   |
|   | ----- |   |   |
| A | WO 2020/216522 A1 (SONY CORP [JP]; SONY EUROPE BV [GB]) 29 October 2020 (2020-10-29) | 1-3,9-15 |   |
|   | * figures 1,2 * |   | TECHNICAL FIELDS SEARCHED (IPC) |
|   | * page 12, line 18 - page 18, line 10 * |   | G01S |
|   | ----- |   | H04W |
| Y | Joshi Sujay S.: "MULTI-TARGET TRACKING VIA NONLINEAR LEAST SQUARES USING DOPPLER MEASUREMENTS FROM A PASSIVE RADAR SYSTEM", , 1 May 2007 (2007-05-01), pages 1-86, XP093042067, Georgia Institute of Technology Retrieved from the Internet: URL:https://smartech.gatech.edu/bitstream/ handle/1853/14576/joshi_sujay_s_200705_mas t.pdf?sequence=1&isAllowed=y [retrieved on 2023-04-25] * page x, line 9 - line 21 * * page 34 - page 36 * | 4-8 |   |
|   | ----- |   |   |

The present search report has been drawn up for all claims

| Place of search | Date of completion of the search | Examiner |
|---|---|---|
| Munich | 26 April 2023 | Töpfer, Nils-Peter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................
& : member of the same patent family, corresponding
    document

EPO FORM 1503 03.82 (P04C01)

Europäisches
Patentamt

European
Patent Office

Office européen
des brevets

**Application Number**

**EP 22 21 6730**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

```
    1. claims: 1-3, 9-15

        Radar processing method for a time synchronized detection of
        scatterers for bistatic radar systems
                        ---


    2. claims: 4-8

        Determination of a position through minimizing a function
                        ---
```

# EP 4 394 443 A1

## ANNEX TO THE EUROPEAN SEARCH REPORT
## ON EUROPEAN PATENT APPLICATION NO.

EP 22 21 6730

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2023

| Patent document cited in search report | Publication date | Patent family member(s) | Publication date |
|---|---|---|---|
| WO 2022207926 A1 | 06-10-2022 | NONE | |
| US 2022291325 A1 | 15-09-2022 | NONE | |
| WO 2020216522 A1 | 29-10-2020 | CN 113728244 A<br>EP 3959538 A1<br>US 2022163651 A1<br>WO 2020216522 A1 | 30-11-2021<br>02-03-2022<br>26-05-2022<br>29-10-2020 |

EPO FORM P0459

For more details about this annex : see Official Journal of the European Patent Office, No. 12/82